(19) Europäisches Patentamt
European Patent Office
Office européen des brevets

(11) Numéro de publication: **0 119 882**
**B1**

(12) # FASCICULE DE BREVET EUROPÉEN

(45) Date de publication du fascicule du brevet: **05.11.86**

(51) Int. Cl.⁴: **D 06 M 15/564,** D 06 M 15/263, D 06 M 15/285, C 08 L 75/06

(21) Numéro de dépôt: **84400276.6**

(22) Date de dépôt: **10.02.84**

(54) **Nouvelle composition d'encollage, sa préparation et son utilisation à l'encollage des fils textiles.**

(30) Priorité: **23.02.83 FR 8302917**

(43) Date de publication de la demande:
**26.09.84 Bulletin 84/39**

(45) Mention de la délivrance du brevet:
**05.11.86 Bulletin 86/45**

(84) Etats contractants désignés:
**AT BE CH DE FR GB IT LI LU NL SE**

(56) Documents cité:
**EP-A-0 011 162**
**EP-A-0 052 949**
**FR-A-2 250 804**
**US-A-4 150 946**

**Le dossier contient des informations techniques présentées postérieurement au dépôt de la demande et ne figurant pas dans le présent fascicule.**

(73) Titulaire: **RHONE- POULENC SPECIALITES CHIMIQUES, "Les Miroirs" 18, Avenue d'Alsace, F-92400 Courbevoie (FR)**

(72) Inventeur: **Gagne, Pierre, 23 bis, Chemin du Grand Bois, F-69160 Tassin la Demi Lune (FR)**
Inventeur: **Girardeau, Yvette, Montée de la Sarra Fontaines Saint- Martin, F-69270 Fontaines/sur/Saone (FR)**
Inventeur: **Pointud, Bernard, 24, Chemin de Traine-Cul, F-69570 Dardilly (FR)**

(74) Mandataire: **Dutruc- Rosset, Marie- Claude, RHONE- POULENC INTERSERVICES Service Brevets Chimie 25, Quai Paul Doumer, F-92408 Courbevoie Cédex (FR)**

EP 0 119 882 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

**Description**

La présente invention a pour objet une nouvelle composition à base de polymères hydrosolubles destinée à l'emcollage des chaînes de fils textiles, en particulier des fils de polyesters.

Elle concerne également le procédé d'obtention desdites compositions.

Enfin, l'invention vise également le procédé d'encollage en milleu aqueux des fils textiles au moyen de cette composition.

Dans l'industrie textile, on tend à abandonner la pratique qui consiste à conférer au fil textile, une résistance à l'abrasion suffisante pour le tissage, en donnant au fil continu, une torsion importante, de l'ordre de plusieurs centaines de tours au mètre en raison du coût de fabrication élevé pour obtenir cette torsion.

On a donc cherché à la supprimer en la remplaçant progressivement par un encollage d'autant plus puissant que la torsion du fil était d'autant plus abaissée. On est donc arrivé actuellement à la torsion minimum de 10 à 15 tours par mètre donnée uniquement par le métier de filature. Mais, alors les produits d'encollage conventionnels s'avèrent insuffisants pour conférer au fil sortant de filature une résistance à l'abrasion permettant le tissage dans de bonnes conditions.

Par ailleurs, on a constaté ces dernières années une accélération de la vitesse des métiers à tisser passant de 250 à 350 coups/minute si bien que les fils de chaînes sont soumis à des frottements plus intensifs et il est alors nécessaire pour la bonne marche de tissage de faire appel à des produits d'encollage de hautes performances.

A titre de produits d'encollage, on a préconisé des homopolymères ou copolymères acryliques et/ou vinyliques.

Mais, ils ne conviennent pas pour l'encollage de tous les fils textiles: en particulier, leur adhérence aux fils à base de polyesters est faible de sorte qu'ils ne protègent pas suffisamment ces fils pour les opérations de tissage.

De plus, compte-tenu de la vitesse accrue des métiers à tisser, on note des éraillages et des casses ce qui se traduit par une diminution du rendement du métier à tisser.

On connaît également selon EP 52 949 un procédé d'encollage des fibres synthétiques qui consiste à appliquer sur les fibres un latex acide d'un polymère vinylique préparé à partir de monomères ayant un paramètre de solubilité dans la gamme 9,0 à 9,5 et comprenant de 8 à 14 % en poids d'acide carboxylique α, β insaturé, ledit polymère ayant un poids moléculaire moyen allant de 300 000 à 2 500 000 et une température de transition vitreuse dans l'intervalle -20 à +20° C.

On sait également par le brevet français 2.192.133 (n°72/ 26094) et son certificat d'addition 2.213.302 (n°73/01358) et par le brevet américain 4.150.946 (n°849602) que l'on peut utiliser, tout particulièrement pour l'encollage des fils de polyesters, des polyesters sulfonés ou des polyester-uréthanes anioniques.

Lesdits polymères présentent un très bon pouvoir d'encollage des fils polyesters si bien que les conditions de rendement du tissage sont excellentes.

Cependant, ces produits ne donnent pas entière satisfaction lorsqu'ils sont utilisés en encollage sectionnel car on constate que les fils se recollent entre eux sur ensouple.

On a proposé une composition d'encollage améliorée décrite dans le brevet français 2.291.314 (n°74/39929) qui se présente sous la forme d'une émulsion ou d'une dispersion aqueuse contenant de 60 à 90 % en poids de matières sèches d'un copolymère acrylovinylique et de 40 à 10 % en poids de matières sèches d'un polyester hydrosoluble.

Les fils de chaîne encollés à l'aide de ladite composition présentent une bonne résistance lors des opérations ultérieures de tissage et l'on ne note pas d'éraillages ou de casses des fils ni d'encrassage des métiers à tisser.

Cependant le désavantage que présente ladite composition est dû au fait qu'elle s'élimine au moyen d'un solvant organique (trichloroéthylène) du fait de son insolubilité dans l'eau ce qui entraîne toujours des problèmes technologiques supplémentaires dus à la toxicité du solvant notamment comme c'est le cas pour le trichloroéthylène et à la nécessité de prévoir une unité de récupération dudit solvant.

Le problème qui se pose est donc de trouver un nouveau produit d'encollage universel permettant d'encoller n'importe quel type de fils polyesters qu'ils soient texturés ou non, qu'ils soient tordus ou non et selon n'importe quelle technique d'encollage en sectionnel ou en nappe primaire et qui satisfasse aux impératifs suivants:

- avoir une bonne affinité pour les fils textiles;
- conférer aux fils textiles une résistance à l'abrasion suffisante afin que le tissage puisse s'effectuer ensuite dans de bonnes conditions;
- permettre une application aisée sur les fils par une mise en oeuvre sous forme de solutions aqueuses;
- ne pas encrasser les peignes des métiers à tisser;
- résister aux contraintes de rendement imposées par les nouveaux métiers à tisser à vitesse rapide;
- être facilement éliminables à l'eau après les opérations de tissage;
- améliorer la vitesse d'encollage et les rendements des métiers à tisser.

Il a maintenant été trouvé une nouvelle composition répondant aux exigences précitées.

La présente invention a en effet pour objet une composition pour l'encollage des chaînes de fils textiles se présentant sous forme d'une solution aqueuse caractérisée par le fait qu'elle comprend:

- un polyester-uréthane anionique comprenant une pluralité de blocs polyesters: ceux-ci étant formés d'au moins un enchaînement de motifs de formules (I) et (II) liés entre eux par des groupements de formule (III)

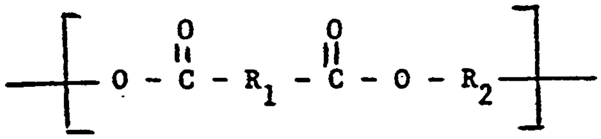 (I)

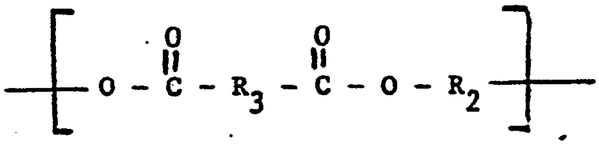 (II)

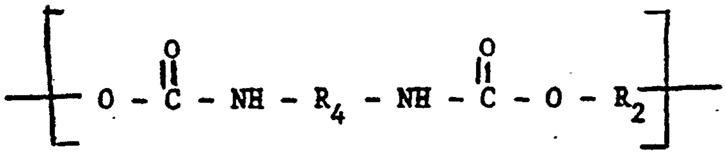 (III)

dans lesdites formules:

- $R_1$ est un radical bivalent qui représente un radical hydrocarboné saturé tel qu'un radical éthylène, tétraméthylène, hexaméthylène, octaméthylène ou un radical hydrocarboné aliphatique insaturé tel qu'un radical vinylène, propènylène-2,3 ou un radical hydrocarboné aromatique monocyclique tel qu'un radical o-phénylène, m-phénylène, p-phénylène.
- $R_2$ est un radical bivalent qui représente un radical aliphatique saturé tel qu'un radical éthylène, tétraméthylène, hexaméthylène, diméthyl-2,2 propylène, oxa-3 pentanylène, oxa-4 heptanylène ou un radical hydrocarboné cyclique saturé tel qu'un radical cyclohexylène-1,4, un radical dicyclohexyl-2,2 propane diyle-4,4'.
- $R_3$ est un radical divalent qui peut être l'un des radicaux suivants:

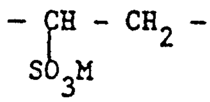 ou 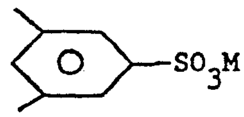

(M étant un métal alcalin tel que le sodium ou le potassium)

- $R_4$ est un radical divalent choisi dans le groupe formé par un radical hexaméthylène, tétraméthylhexaméthylène,

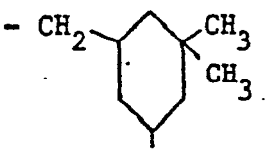

m-phénylène, p-phénylène, tolylène-2,4,
tolylène-2,6, dicyclohexylméthane diyle-4,4', diphénylméthane diyle-4,4', naphtalène diyle-1,5,

dans lequel le polyester a une teneur en soufre d'au moins 0,5 % en poids, un indice d'acide inférieur à 20 mg de KOH par gramme et une masse moléculaire moyenne en nombre comprise entre 500 et 3000;

- un polymère dérivé d'un monomère acrylique de formule:

$CH_2 = CX - Y$ (IV)

dans laquelle X est un atome d'hydrogène ou un radical méthyle et Y est l'un des groupements suivants:

- COOH
- COOZ Z étant un radical alcoyle ayant de 1 à 8 atomes de carbone
- C = N

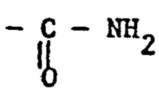

et/ou

d'un monomère vinylique répondant à la formule:

$CH_2 = CH - OOCR$ (V)

dans laquelle R est un radical hydrocarboné contenant de 1 à 20 atomes de carbone.

Ledit polymère est tel qu'il soit soluble dans l'eau à un pH supérieur à 8, que sa température de transition vitreuse (Tg) soit au moins supérieure à 25° C et que sa dureté mesurée selon la norme française NF T 30-016 soit supérieure à 55 secondes.

Le polyester-uréthane anionique intervenant dans la composition de l'invention est un produit connu et décrit dans le brevet américain 4 150 946. Il est obtenu par réaction d'un polyester anionique sulfoné avec au moins un diisocyanate; le rapport molaire NOO/OH + COOH étant inférieur à 1.

Le polyester sulfoné de base entrant dans la composition dudit polyester-uréthane est préparé de manière classique par co-condensation d'un diacide organique (tel qu'un diacide aliphatique saturé ou insaturé, un diacide aromatique, un diacide présentant plusieurs noyaux aromatiques, un diacide arylaliphatique), l'un de ses diesters ou son anhydride et d'un diacide organique sulfoné ou l'un de ses diesters avec un diol.

La réaction de condensation est effectuée de manière classique, en présence d'un catalyseur habituel de polyestérification, par exemple, l'orthotitanate de tétraisopropyle.

Comme monomères de départ couramment utilisés pour la préparation du polyester sulfoné, on peut citer en tant que:

- diacides organiques: les diacides aliphatiques saturés ou insaturés, les diacides aromatiques, tels que les acides succinique, adipique, subérique, sébacique, les acides maléique, fumarique, itaconique, les acides orthophtalique, isophtalique, téréphtalique, les anhydrides de ces acides et leurs diesters comme les diesters méthyliques, éthyliques, propyliques, butyliques. Les composes preférés sont l'acide adipique, les acides othophtalique, isophtalique, téréphtalique;
- diacides organiques sulfonés: les diacides sulfonate de sodium ou leurs diesters tels que les dialcoylisophtalates et dialcoylsulfosuccinates comme le diméthylisophtalate-5 sulfonate de sodium ou le diméthylsulfosuccinate de sodium;
- diols: les glycols aliphatiques tels que l'éthylèneglycol, le diéthylèneglycol, le dipropylèneglycol et les homologues supérieurs, le butanediol-1,4, l'hexanediol-1,6, le néopentylglycol et les glycols cyclaniques tels que le cyclohexanediol, le dicyclohexanediolpropane. Les diols choisis préférentiellement sont l'éthylèneglycol et le diéthylèneglycol.

Les polyesters de base préférés sont ceux qui ont une masse moléculaire moyenne en nombre comprise entre 1000 et 3000, un indice d'acide inférieur à 5 mg de KOH/g, un taux de soufre compris entre 0,8 et 2 % en poids, de préférence entre 1,2 et 1,8 %.

Dans un deuxième temps, le polyester sulfoné obtenu est mis à réagir avec au moins un diisocyanate à une température comprise entre 130 et 230° C. Pour la mise en oeuvre de cette réaction, on travaille en milieu solide ou en milieu fondu mais de préférence, en milieu fondu.

La quantité de diisocyanate à mettre en oeuvre est déterminée de telle sorte que le rapport NCO/OH + COOH soit inférieur à 1.

A titre de diisocyanates, on peut mettre en oeuvre des diisocyanates aliphatiques, cyclaniques, cycléniques, aryliques ou alcoylaryliques tels que l'hexaméthylène-diisocyanate, le tétraméthyl-hexaméthylène-diisocyanate, l'isophorone-diisocyanate, les m- et p-phénylène-diisocyanate, les toluène-2,4 diisocyanate et toluène-2,6 diisocyanate, le dicyclohexylméthane-4,4'diisocyanate, le diphénylméthane-4,4' diisocyanate, le naphtalène-1,5 diisocyanate.

La masse moléculaire moyenne en nombre du polyester-uréthane ainsi obtenu varie entre 10 000 et 100 000.

Les polymères dérivés d'un monomère acrylique et/ou d'un monomère vinylique qui entrent en jeu dans les compositions de l'invention, sont des produits de type connu.

A titre illustratif des monomères acryliques susceptibles d'être employés, on peut citer: l'acide acrylique, l'acide méthacrylique et leurs esters d'alcoyle contenant de 1 à 8 atomes de carbone, l'acrylamide, le méthacrylamide, l'acrylonitrile, le méthacrylonitrile.

Les monomères acryliques qui sont utilisés préférentiellement répondent à la formule (IV) dans laquelle X représente un atome d'hydrogène ou un radical méthyle et Y représente un radical -COOH, -COOZ dans lequel Z représente un radical méthyle, butyle, éthylhexyle ou un groupement -C=N.

Comme composés préférentiels répondant à la formule (V) on met en oeuvre ceux dans laquelle R est un radical alcoyle contenant de 1 à 20 atomes de carbone, tel que: un radical méthyle, éthyle, propyle, heptadécanyle ou un radical aromatique tel que le radical phényle.

Comme monomères vinyliques utilisés préférentiellement, on peut citer: l'acétate de vinyle, le propionate de vinyle, le butyrate de vinyle, le stéarate de vinyle et le benzoate de vinyle.

Le choix des monomères intervenant dans le polymère acrylique et/ou vinylique ainsi que leur concentration influent sur les caractèristiques physico-chimiques du polymère obtenu.

Généralement on met en oeuvre trois, voire-même quatre monomères.

Ils seront choisis de telle sorte que le polymère obtenu réponde aux exigences de solubilité, de thermoplasticité et de dureté précédemment énoncées.

Le polymère acrylique et/ou vinylique doit être soluble dans l'eau à pH supérieur à 8.

Sa température de transition vitreuse doit être supérieure à 25° C.

Elle est mesurée à l'aide d'un appareil Differential Scanning Carorimeter.

Elle peut varier d'une manière préférentielle entre 25 et 55° C.

En ce qui concerne la dureté du polymère, on a trouvé qu'une valeur supérieure à 55 secondes convient tout particulièrement bien.

La dureté est mesurée selon la norme NF-T30-016 à l'aide d'un pendule PERSOZ (marque déposée).

Préférentiellement, on choisit un polymère dont sa dureté se situe dans l'intervalle variant entre 55 et 300 secondes.

Le choix des monomères permettant d'obtenir un polymère avec les propriétés requises relève de la compétence de l'homme de l'art.

On précise ci-après, sans aucun caractère limitatif divers moyens conduisant à un tel polymère.

Un des moyens d'obtenir la solubilité du polymère à obtenir est d'introduire une proportion d'au moins 5 % en poids exprimée par rapport au poids total des monomères mis en jeu, de fonctions carboxyliques susceptibles d'être apportées par l'acide acrylique et/ou méthacrylique.

D'une manière préférentielle, ladite proportion ne dépasse pas 20 %.

La solubilité peut être également améliorée par le choix de monomères à caractère hydrophile tel que, par exemple, l'acrylamide, l'acrylonitrile.

Pour que le polymère possède une température de transition vitreuse comprise dans les bornes précédemment définies, on choisit la nature et la concentration des différents monomères de telle sorte que la température vitreuse dudit polymère réponde à la formule théorique bien connue et mentionnée par exemple, dans l'encyclopédie "Polymers Handbook"

$$\frac{1}{Tg} = \frac{[A]}{Tg_A} + \frac{[B]}{Tg_B} + \frac{[C]}{Tg_C} \text{ etc...}$$

[A] représente le pourcentage pondéral du monomère A par rapport au poids total des monomères
[B] représente le pourcentage pondéral du monomère B par rapport au poids total des monomères
[C] représente le pourcentage pondéral du monomère C par rapport au poids total des monomères.
$Tg_A$ correspond à la température de transition vitreuse du monomère A
$Tg_B$ correspond à la température de transition vitreuse du monomère B
$Tg_C$ correspond à la température de transition vitreuse du monomère C
Tg correspond à la température de transition vitreuse du polymère.

Afin d'obtenir une dureté supérieure à la norme inférieure minimale précédemment définie, il est conseillé d'employer des monomères tels que, par exemple, l'acrylonitrile, l'acétate de vinyle ou le méthacrylate de méthyle.

La préparation du polymère dérivé d'un monomère acrylique et/ou vinylique est réalisée d'une manière classique selon les techniques de polymérisation en solution ou en émulsion aqueuse bien connues de l'homme de l'art.

La polymérisation des monomères acryliques et/ou vinyliques conduit à l'obtention d'une émulsion de polymère qui passe sous forme de solution par addition d'une base telle que, par exemple, l'ammoniaque, jusqu'à obtention du pH compris entre 7,5 et 10.

La solution aqueuse de polymère acrylique et/ou vinylique obtenue peut contenir de 20 à 60 % en poids de matières sèches, de préférence de 25 à 35 %.

Les quantités respectives des deux constituants intervenant dans les compositions de l'invention peuvent varier dans de larges limites.

Les proportions respectives de chaque composant exprimées en poids de matières sèches peuvent être choisies dans les intervalles suivants:

- de 40 à 90 % en poids de polyester-uréthane
- de 10 à 60 % en poids de polymère acrylique et/ou vinylique

Les performances à l'encollage sont d'autant meilleures que la quantité de polyester-uréthane augmente si bien que les compositions préférées renferment:

- de 70 à 90 % en poids de polyester-uréthane
- de 10 à 30 % en poids de polymère acrylique et/ou vinylique

Les compositions de l'invention peuvent être obtenues par simple mélange sous agitation, du polyester-uréthane en solution aqueuse avec le polymère acrylique et/ou vinylique sous forme de solution aqueuse.

L'opération de mélange s'effectue à chaud, à une température variant de 40 à 70°C, et de préférence de l'ordre de 50°C.

L'agitation est réalisée à l'aide des moyens classiques d'agitation (hélice, ancre, cadre...).

Elles peuvent être préparées soit immédiatement avant leur utilisation pour l'encollage, à partir de leurs constituants, soit bien avant leur usage et être stockées. En effet, les compositions de l'invention restent parfaitement stables au stockage dans la mesure où leur pH est contrôlé et éventuellement réajusté entre 4 et 8,5.

La présente invention concerne également un procédé d'encollage des chaînes de fils textiles qui consiste à appliquer les compositions qui viennent d'être décrites en milieu aqueux, selon une technique classique dont le principe est d'immerger les fils dans un bain aqueux contenant le produit d'encollage à la concentration et à la température désirées que l'on nommera par la suite bain de colle, puis d'essorer lesdits fils par passage entre des rouleaux et enfin à sécher les fils encollés sur des cylindres chauffants, éventuellement par passage

préalable dans des chambres chaudes: la chaîne est alors prête à être tissée.

Une illustration de ce principe réside dans les deux méthodes d'encollage pour fil continu qui sont l'encollage en sectionnel et l'encollage en nappe primaire.

Selon la technique d'encollage en sectionnel, le fil est ourdi avant son encollage. L'ourdissage consiste à mettre en place les fils pour former la chaîne en vue du tissage. Dans cette chaîne d'environ 1,50 à 1,80 mètre de large et de 2 000 à 5 000 mètres de long, il y a 35 à 60 fils au centimètre.

Pendant l'encollage, la chaîne subit les opérations suivantes:

. immersion: dans le bain de colle maintenu à température de l'ordre de 25 à 30° C

. essorage: au moyen d'un système de foulard dont la pression exercée par les rouleaux est d'environ 3 kg/cm$^2$ mais qui peut varier selon le matériel utilisé

. séchage: la chaîne passe sur une série de cylindres chauffants généralement au nombre de six et dont la température varie entre 70 et 140° C. Pour éviter l'encrassage des cylindres, il est préférable qu'ils soient recouverts d'un revêtement de type polytétrafluoroéthylène.

. réception sur ensouple: avant réception, des baguettes en inox séparent la chaîne en plusieurs nappes.

Cette succession d'opérations s'effectue à une vitesse comprise entre 35 et 65 m/mn. L'ensouple sera ensuite montée sur le métier à tisser.

L'encollage en nappe primaire diffère de la méthode précédente en ce sens que l'ourdissage n'est pas obligatoire. On peut partir soit d'une ensouple sur laquelle se trouve une nappe de 1 000 fils à 2000 fils (6 à 10 fils au cm) et d'une longueur de 50 à 100 000 mètres ou soit de 1 000 bobines de fils pour une nappe de 1 000 fils. Dans tous les cas, les fils se présentent sur l'encolleuse avec un intervalle régulier entre chacun d'entre eux.

L'encollage impose les opérations suivantes:

. immersion: de la chaîne dans un bain de colle maintenue à température de l'ordre de 25 à 30° C.

. essorage: au moyen d'un système de foulard et de manière identique à la méthode d'encollage en sectionnel.

. séchage: la nappe passe successivement dans deux chambres chaudes dont l'air est chauffé aux environs de 110 à 150° C puis sur une série de cylindres chauffants, généralement cinq et dont la température est de 100-130° C: les températures de séchage étant fonction des colles utilisées.

. réception sur ensouple: avant la réception, les fils passent à travers un peigne afin d'assurer un intervalle entre chaque fil.

Cette succession d'opérations s'effectue à une vitesse comprise entre 100 et 300 m/mn.

L'ensouple ainsi obtenue est dirigée sur l'atelier de réunissage pour réaliser une chaîne destinée au tissage.

L'encollage obtenu est de meilleure qualité lorsqu'il est réalisé selon cette méthode.

Les compositions de l'invention peuvent être mises en oeuvre selon les deux techniques d'encollage en sectionnel ou en nappe primaire: celles-ci étant diluées à l'eau pour l'obtention d'un bain à concentration désirée.

Cette concentration du bain peut varier entre 5 et 20 % en poids de polymères exprimés en matières sèches. Elle sera déterminée par l'homme de l'art, compte-tenu de l'appareillage employé pour la réalisation du cycle d'encollage, en particulier de la puissance d'exprimage des rouleaux et de la quantité de colle que l'on désire appliquer sur les fils. On sait que celle-ci dépend d'une part de la résistance des fils qui est elle-même fonction de leur texturation, de leur degré de torsion, du nombre de brins au fil unitaire et d'autre part de la capacité d'adhérence du produit d'encollage aux fils à traiter. La quantité de colle à déposer doit être d'autant plus élevée que les fils sont moins résistants par eux-mêmes; elle doit être aussi d'autant plus importante que la colle est moins adhérente et a une plus grande tendance à s'éliminer au tissage. Généralement, un dépôt de 3 à 10 % de la composition comptée en matières sèches par rapport au poids du fil, est suffisant pour l'ensemble des cas d'application, incluant les fils les plus difficiles à encoller tels que ceux à base de polytéréphtalate d'éthylène glycol. Un dépôt représentant une quantité supérieure est parfaitement envisageable mais il n'apporte pas d'avantages réels et peut même être préjudiciable car il conduit au défaut dit de collage sur ensouple et à l'encrassage des organes du métier. Les quantités préférentielles de composition se situent entre 3 et 7 % du poids du fil.

Les fils de chaîne encollés dans les conditions de l'invention présentent une résistance suffisante pour les opérations ultérieures de tissage. Les brins unitaires sont correctement agglomérés et l'on ne note pas d'éraillages et de casses des fils ni d'encrassage des métiers à tisser.

Après le tissage, le désencollage s'effectue à l'eau. Les textiles sont désencollés par passage dans un bain d'eau adoucie par passage sur des résines échangeuses d'ions pour éliminer les ions calcium. Ce bain est maintenu à une température de 80 à 90° C et à un pH légèrement alcalin allant de 9 à 10 ajusté par addition de carbonate de sodium ou de soude.

Afin de permettre simultanément l'élimination de produits d'ensimage, il est usuel d'ajouter dans le bain de désencollage un détergent qui peut être un tensio-actif anionique ou non-ionique à raison de 2 à 5 g/l.

Pour le choix de l'agent tensio-actif, on peut se reporter, entre autres, à l'encyclopédie "ENCYCLOPEDIA CHEMICAL TECHNOLOGY-Kirk OTHMER - volume 19" ou aux différents ouvrages de la Série Surfactant Sciences Series, Marcel DEKKER Inc - Vol. 1: Nonionic Surfactants de Martin J. SCHICK et Vol. 7: Anionic Surfactants de Warner M. LINFIELD ou à l'ouvrage de Mc. CUTCHEON'S: Detergents and Emulsifiers - International and North American Edition.

De préférence, on choisira un tensio-actif non-ionique tel qu'un alcoylphénol polyoxyéthyléné.

Il ressort de la description qui précède que les compositions d'encollage de l'invention sont particulièrement intéressantes pour apprêter les fibres synthétiques de polytéréphthalate d'éthylèneglycol qui sont parmi les fibres textiles les plus difficiles à encoller mais sont également utilisables pour des fibres de polytéréphthalate d'éthylène-glycol mélangées avec des fibres naturelles ou pour d'autres fibres telles que: fibres acryliques, fibres polyimides, chlorofibre, fibres polyéthylène, polypropylène.

De plus, elles permettent d'encoller n'importe quel type de fils qu'ils soient texturés ou non, tordus ou non et selon n'importe quelle technique d'encollage que ce soit de l'encollage en sectionnel ou en nappe primaire.

Un avantage très important de ces compositions est qu'elles résistent aux contraintes de rendement des nouveaux métiers à tisser. Elles permettent d'effectuer l'encollage à des vitesses plus grandes passant de 130-140 m/mn à 230-250 m/mn dans le cas d'un encollage en nappe primaire car elles sèchent beaucoup plus rapidement que l'un ou l'autre de ses constituants, ce qui représente une économie d'énergie non négligeable.

Le recollage des fils sur ensouple est diminue par rapport au polyester-uréthane seul et la force d'encollage est améliorée par rapport aux polymères acrylo-vinyliques.

Les exemples qui suivent, illustrent l'invention sans toutefois la limiter.

L'exemple 1 décrit la préparation d'une composition de l'invention.

Suivent les exemples 2 et 3 concernant l'encollage de différents fils textiles suivi par l'opération de tissage.

## EXEMPLE 1

Cet exemple illustre la préparation d'une composition selon l'invention.

a) - <u>Préparation du polyester-uréthane</u>

Le polyester-uréthane mis en oeuvre est celui décrit dans l'exemple 4 du brevet américain 4 150 946.

b) - <u>Préparation du copolymère acrylique</u>

La polymérisation des monomères acryliques qui sont: l'acrylate de butyle, le méthacrylate de méthyle, l'acide acrylique, est réalisée de manière classique selon une technique de polymérisation en émulsion, en présence d'un catalyseur d'initiation de la polymérisation et d'un agent limitant la longueur des chaînes.

L'agent émulsifiant utilisé est un sulfate d'alcoylphénol polyoxyéthyléné.

L'initiateur de polymérisation est un système Rédox: persulfate d'ammonium et métabisulfite de sodium.

L'agent utilisé pour limiter la longueur des chaînes et le tertiododécylmercaptan.

Le mode opératoire est le suivant:

Dans un autoclave équipé d'un système d'agitation, d'un dispositif d'enregistrement de la température, d'un circuit de distillation à reflux, de dispositifs de stockage et d'introduction des monomères, on charge:

- eau permutée................: 292 kg
- agent émulsifiant...........: 5 kg

On agite le milieu puis on chaufie l'autoclave à 70° C.

Lorsque la température est stabilisée, on ajoute l'initiateur de polymérisation par l'intermédiaire de pompes doseuses:

- 1 kg de persulfate d'ammonium en solution dans 5 litres d'eau permutée
- 0,2 kg de métabisulfite de sodium en solution dans 2 litres d'eau permutée

puis on ajoute, pendant 4 heures et en maintenant la température à 70° C, les charges suivantes par l'intermédiaire de la pompe doseuse:

- 165 kg d'eau permutée
- 5 kg d'agent émulsifiant
- 148 kg d'acrylate de butyle
- 124 kg de méthacrylate de méthyle
- 29 kg d'acide acrylique
- 1,3 kg de tertiododécylmercaptan.

Durant l'addition des monomères on refroidit le milieu réactionnel de manière à maintenir une température de 65° C.

On obtient une émulsion translucide, peu visqueuse, contenant 40 % de matières séches.

On réalise ensuite la dilution et la neutralisation de l'émulsion obtenue.

On dilue l'émulsion obtenue avec un mélange d'eau permutée et d'ammoniaque, préchauffé à 80° C que l'on ajoute sous agitation afin d'obtenir une solution aqueuse dudit polymère ayant les caractéristiques suivantes:

- matières sèches.................. 25 %
- pH................................ 8,2

Le copolymère acrylique obtenu possède une température de transition vitreuse de 27° C et une dureté de 60 secondes.

c) - Préparation de la composition selon l'invention

Dans un autoclave équipé d'un système d'agitation et d'un dispositif d'enregistrement de la température, on introduit 1500 kg d'une solution aqueuse à 25 % en poids de polyester-uréthanne décrit en a), puis on ajoute, sous agitation, 750 kg de solution aqueuse de copolymères acryliques, telle qu'obtenue précédemment en b).

On réalise le mélange à 52° C et sous agitation.

On introduit ensuite 14 litres d'ammoniaque afin d'amener le pH de la composition d'encollage à un pH de 8.

On obtient un produit limpide, de couleur brun-vert, dont les caractéristiques sont les suivantes:
- pH mesuré sur une solution à 15 % de matières sèches.........................: 7,9
- matières sèches.........................: 25 %
- viscosité à 20° C.......................: 56 cps
produit brun-verdâtre limpide.

**EXEMPLE 2**

Cet exemple illustre l'encollage et le tissage de chaînes de fils polyester 167 décitex, 30 brins, non tordus, brins mélés à l'air comprimé en filature.

On prépare un bain à 16 % de matières sèches par dilution à l'eau froide ou tiède et sous agitation.

Ce bain est placé dans le réservoir d'une machine à encoller TSUDAKOWA (marque déposée). Sur cette machine, une chaîne de polyester de 1500 fils, répartis sur 160 centimètres, est immergée dans le bain de colle, puis essorée par passage entre deux cylindres. Le séchage s'effectue par passage, d'abord dans deux chambres de 4,50 m de longueur chauffées à 145°C et ventilées, puis sur cinq cylindres recouverts de polytétrafluoroéthylène et chauffés à des temperatures décroissantes de 125 à 110° C. A la sortie des cylindres, avant le four de refroidissement, on applique un lubrifiant (cire fondue à 90° C) par léchage sur un rouleau tournant à faible vitesse. La vitesse de passage sur l'encolleuse est de 235 m à la minute. Le dépôt de colle est voisin de 5 %, le taux moyen de lubrifiant est de 0,3 %. Ce système est un encollage dit "nappe primaire", dans lequel on confectionne généralement quatre ensouples qu'il faut ensuite réunir pour obtenir la chaîne de tissage finale d'environ 6000 fils.

Cette chaîne est alors montée sur un métier SULZER (marque déposée) double largeur: celui-ci est un métier à projectile tournant à la vitesse de 210 coups/minute. La salle de tissage est conditionnée à 62 % d'humidité relative et 23° C.

On réalise alors un tissage excellent, sans éraillage, ni rupture de brins; le rendement est bon: le nombre d'interventions sur le métier est inférieur à deux pour huit heures de tissage. En outre, on ne constate aucun dépôt sur les organes du métier: rouleau porte-fil, lamelles du casse-chaîne, mailles, peignes et dents de guidage du projectile.

A noter, également, qu'il n'y a aucun recollage entre elles, des spires de fil constituant l'ensouple et ceci jusqu'à la fin complète de l'ensouple.

Après le tissage, on procède à l'opération de désencollage par lavage du tissu afin qu'il puisse subir les opérations de teinture et/ou d'impression.

Le désencollage s'effectue dans une laveuse, ensemble de bacs disposés en cascade, comprenant deux bacs de lavage et quatre bacs de rinçage.

Le bain des bacs de lavage est constitué d'une solution chauffée à 85° C:

+ 2 g/l d'un tensio-actif non ionique: un nonylphénol condensé avec 6 molécules d'oxyde d'éthylène par mole de phénol

+ 3 g/l de carbonate de sodium dans de l'eau désionisée. Les deux premiers bacs de rinçage contiennent de l'eau désionisée, chauffée à 60° C, les suivants sont remplis d'eau, également désionisée mais non chauffée.

La vitesse de passage dans la laveuse est de 30 mètres/mn.

**EXEMPLE 3**

La composition de l'invention est appliquée sur un fil polyester texturé FT (fausse torsion) 76 décitex, 24 brins, tordus à 180 tours au mètre.

L'encollage est, cette fois, réalisé en système sectionnel: sur une machine SUCKER (marque déposée) à 7 cylindres, la nappe de fil dans sa totalité, 5000 fils environ réunis sur un seul rouleau placé à l'entrée de l'encolleuse, est immergée dans un bain contenant 6 % de matières sèches. La nappe, comme précédemment, est essorée par passage entre 2 cylindres. Le séchage est fait par passage sur 7 cylindres dont les 4 premiers sont recouverts de tétrafluoroéthylène et chauffés à des températures décroissantes de 135°C à 90°C. La vitesse de passage est de 40 m/mn, le taux de colle obtenu est voisin de 6 %.

Cette chaîne est ensuite directement placée sur un métier a lance (type SAURE marque déposée) tournant à la vitesse de 210 coups/minute où, encore, le tissage se fait dans de très bonnes conditions. On ne constate aucune détérioration du fil, le nombre d'interventions pour casse restant à un niveau très bas.

Les dépôts sur les organes du métier sont encore pratiquement nuls.

**Revendications**

1 - Composition pour l'encollage des chaînes de fils textiles se présentant sous forme d'une solution aqueuse caractérisée par le fait qu'elle comprend:

- un polyester-uréthane anionique comprenant une pluralité de blocs polyesters: ceux-ci étant formés d'au moins un enchaînement de motifs de formules (I) et (II) liés entre eux par des groupements de formule (III)

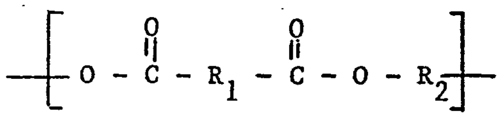 (I)

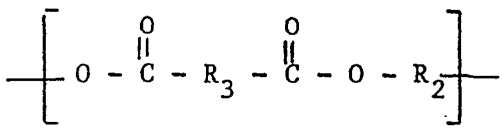 (II)

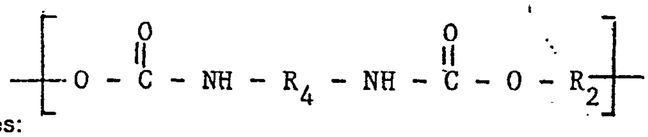 (III)

dans lesdites formules:

- $R_1$ est un radical bivalent qui représente un radical hydrocarboné saturé ou un radical hydrocarboné aliphatique insaturé ou un radical hydrocarboné aromatique monocyclique.
- $R_2$ est un radical bivalent qui représente un radical aliphatique saturé ou un radical hydrocarboné cyclique saturé.
- $R_3$ est un radical divalent qui peut être l'un des radicaux suivants:

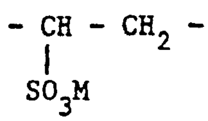 ou 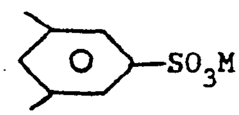

(M étant un métal alcalin tel que le sodium ou le potassium)

- $R_4$ est un radical divalent choisi dans le groupe formé par un radical hexaméthylène, tétraméthylhexaméthylène,

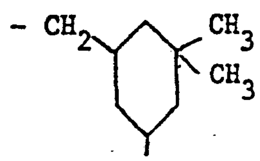

m-phénylène, p-phénylène, tolylène-2,4, tolylène-2,6, dicyclohexylméthane diyle-4,4', diphénylméthane diyle-4,4',naphtalène diyle-1,5,

dans lequel le polyester a une teneur en soufre d'au moins 0,5 % en poids, un indice d'acide inférieur à 20 mg de KOH par gramme et une masse moléculaire moyenne en nombre comprise entre 500 et 3000; - un polymère dérivé d'un monomère acrylique de formule:

$CH_2 = CX - Y$ (IV)

dans laquelle X est un atome d'hydrogène ou un radical méthyle et Y est l'un des groupements suivants: - COOH

- COOZ Z étant un radical alcoyle ayant de 1 à 8 atomes de carbone - C ≡ N

$$-\underset{\underset{O}{\|}}{C}-NH_2$$

et/ou
d'un monomère vinylique répondant à la formule:
$CH_2 = CH - OOCR$ (V)
dans laquelle R est un radical hydrocarboné contenant de 1 à 20 atomes de carbone
ledit polymère est tel qu'il soit soluble dans l'eau à un pH supérieur à 8, que sa température de transition vitreuse (Tg) soit au moins supérieure à 25°C et que sa dureté mesurée selon la norme française NF T 30-016 soit supérieure à 55 secondes.

2 - Composition selon la revendication 1 caractérisé par le fait que $R_1$ représente un radical éthylène, tétraméthylène, hexaméthylène, octaméthylène, un radical vinylène, propènylène-2,3, un radical o-phénylène, m-phénylène, p-phénylène et $R_2$ représente un radical éthylène, tétraméthylène, hexaméthylène, diméthyl-2,2 propylène, oxa-3 pentanylène, oxa-4 heptanylène, un radical cyclo-hexylène-1,4, un radical dicyclohexyl-2,2 propane diyle-4,4'.

3 - Composition selon la revendication 1 caractérisée par le fait que le polyester sulfoné entrant dans la composition du polyesteruréthane est obtenu par co-condensation d'un diacide organique, l'un de ses diesters ou son anhydride et d'un diacide organique sulfoné ou l'un de ses diesters avec un diol.

4 - Composition selon la revendication 3 caractérisée par le fait que le diacide organique est un diacide aliphatique saturé tel que l'acide succinique, adipique, subérique, sébacique, un diacide aliphatique insaturé tel que l'acide maléique, fumarique, itaconique, un diacide aromatique tel que l'acide orthophthalique, isophthalique, téréphthalique.

5 - Composition selon la revendication 3 caractérisée par le fait que le diacide organique sulfoné est un dialcoylisophthalate ou un dialcoylsulfosuccinate tel que le diméthylisophthalate-5 sulfonate de sodium ou le diméthylsulfosuccinate de sodium.

6 - Composition selon la revendication 3 caractérisée par le fait que le diol est un glycol aliphatique tel que l'éthylèneglycol, le diéthylèneglycol, le dipropylèneglycol, le butanediol-1,4, l'hexanediol-1,6, le néopentylglycol; un glycol cyclanique tel que le cyclohexanediol, le dicyclohexanediol propane.

7 - Composition selon l'une des revendications 1 à 6 caractérisée par le fait que le polyester sulfoné entrant dans la composition du polyester-uréthane a une masse moléculaire moyenne en nombre comprise entre 1000 et 3000, un indice d'acide inférieur à 5 mg de KOH/g, un taux de soufre compris entre 0,8 et 2 %.

8 - Composition selon la revendication 1 caractérisée par le fait que le diisocyanate intervenant dans la composition du polyesteruréthane est l'hexaméthylène-diisocyanate, le tétraméthyl-hexaméthylène-diisocyanate, l'isophorone-diisocyanate, les m- et p-phénylène-diisocyanate, les toluène-2,4 et -2,6 diisocyanate, le dicyclohexylméthane-4,4' diisocyanate, le diphénylméthane-4,4' diisocyanate, le naphthalène-1,5 diisocyanate: sa quantité mise en jeu est telle que le rapport NCO/OH + COOH est inférieur à 1.

9 - Composition selon la revendication 1 caractérisée par le fait que le polymère acrylique et/ou vinylique est soluble à pH superieur à 8, a une température de transition vitreuse comprise entre 25 et 55°C et une dureté mesurée selon la norme française NF T 30-016 comprise entre 55 et 300 secondes.

10 - Composition selon la revendication 1 caractérisée par le fait que le monomère acrylique intervenant dans le polymère acrylique et/ou vinylique est l'acide acrylique, l'acide méthacrylique et leurs esters d'alcoyle contenant de 1 à 8 atomes de carbone, l'acrylamide, le méthacrylamide, l'acrylonitrile, le méthacrylonitrile.

11 - Composition selon la revendication 10 caractérisée par le fait que le monomère acrylique répond à la formule (IV) dans laquelle X représente un atome d'hydrogène ou un radical méthyle et Y représente un radical -COOH, -COOZ dans lequel Z représente un radical méthyle, butyle, éthylhéxyle ou un groupement -C=N.

12 - Composition selon la revendication 1 caractérisée par le fait que le monomère vinylique intervenant dans le polymère acrylique et/ou vinylique répond à la formule (V) dans laquelle R est un radical alcoyle contenant de 1 à 20 atomes de carbone ou un radical aromatique.

13 - Composition selon la revendication 12 caractérisée par le fait que le monomère vinylique est l'acétate de vinyle, le propionate de vinyle, le butyrate de vinyle, le stéarate de vinyle et le benzoate de vinyle.

14 - Composition selon la revendication 1 caractérisée par le fait que le polymère acrylique et/ou vinylique est obtenu sous forme de solution par addition d'une base dans l'émulsion acrylique et/ou vinylique jusqu'à obtention d'un pH compris entre 7,5 et 10.

15 - Composition selon la revendication 14 caractérisée par le fait que la base est l'ammoniaque.

16 - Composition selon la revendication 1 caractérisée par le fait qu'elle comprend:
- de 40 à 90 % en poids de polyester-uréthane
- de 10 à 60 % en poids de polymère acrylique et/ou vinylique.

17 - Composition selon la revendication 16 caractérisée par le fait qu'elle comprend:
- de 70 à 90 % en poids de polyester-uréthane
- de 10 à 30 % en poids de polymère acrylique et/ou vinylique.

18 - Procédé de préparation de la composition selon l'une des revendications 1 à 17 caractérisé par le fait qu'il consiste à faire le mélange sous agitation du polyester-uréthane en solution aqueuse avec le polymère

acrylique et/ou vinylique sous forme de solution aqueuse.

19 - Procédé selon la revendication 18 caractérisé par le fait que le mélange s'effectue à une température de 40 à 70° C.

20 - Procédé selon la revendication 18 caractérisé par le fait que le pH du mélange est contrôlé entre 4 et 8,5.

21 - Procédé d'encollage des chaînes de fils textiles à l'aide de la composition décrite dans l'une des revendications 1 à 17 caractérisé par le fait que l'on effectue l'encollage des chaînes de fils selon une technique qui consiste à immerger les fils dans un bain aqueux contenant ladite composition à la concentration et à la température désirées puis à essorer lesdits fils par passage entre des rouleaux et enfin à sécher les fils encollés sur des cylindres chauffants, éventuellement par passage préalable dans des chambres chaudes.

22 - Procédé selon la revendication 21 caractérisé par le fait que la concentration du bain aqueux est telle que les fils obtenus présentent une résistance à l'abrasion suffisante lors des opérations ultérieures de tissage.

23 - Procédé selon la revendication 22 caractérisé par le fait que la concentration du bain aqueux varie de 5 à 20 %.

24 - Procédé selon la revendication 21 caractérisé par le fait que la température du bain aqueux varie de 25 à 30° C.

25 - Procédé selon la revendication 21 caractérisé par le fait que l'on effectue l'encollage des chaînes de fils selon la technique d'encollage en sectionnel.

26 - Procédé selon la revendication 21 caractérisé par le fait que l'on effectue l'encollage des chaînes de fils selon la technique d'encollage en nappe primaire.

**Patentansprüche**

1. Zusammensetzung zum Leimen von Ketten textiler Fäden, die in Form einer wässrigen Lösung vorliegt und dadurch gekennzeichnet ist, daß sie umfasst:

- ein anionisches Polyester-Urethan, das eine Vielzahl von Polyesterblocks enthält, die durch wenigstens eine Aneinanderkettung von Bausteinen der Formel (I) und (II) gebildet sind, die untereinander durch Gruppierungen der Formel (III) verbunden werden

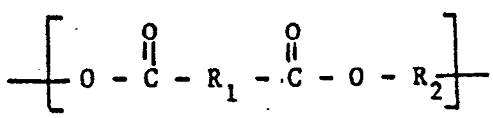
(I)

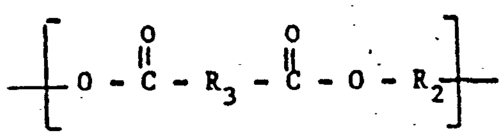
(II)

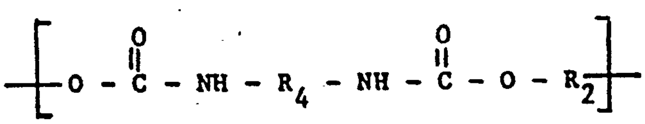
(III)

wobei in diesen Formeln die Reste $R_1$, $R_2$, $R_3$, $R_4$ die folgende Bedeutung besitzen:

- $R_1$ ist ein zweiwertiges Radikal, das ein gesättigtes Kohlenwasserstoffradikal oder ein ungesättigtes aliphatisches Kohlenwasserstoffradikal oder ein monocyclisches aromatisches Kohlenwasserstoffradikal sein kann;

- $R_2$ ist ein zweiwertiges Radikal, das ein gesättigtes aliphatisches Radikal oder ein gesättigtes cyclisches Kohlenwasserstoffradikal sein kann;

- $R_3$ ist ein zweiwertiges Radikal, das einer der folgenden Reste sein kann:

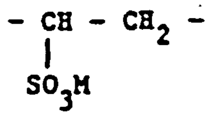

oder

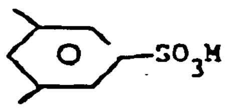

(M ist ein Alkalimetall wie Natrium oder Kalium)

- $R_4$ ist ein zweiwertiges Radikal, das aus der Gruppe ausgewählt wird, die gebildet wird durch ein Hexamethylen-, Tetramethylhexamethylen-,

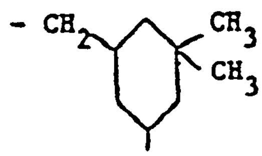

m-Phenylen; p-Phenylen- 2,4-Tolylen- 2,6-Tolylen-, Dicyclohexylmethandiyl-4,4'- Diphenyl-methandiyl-4,4'-, Naphthalindiyl-1,5;Radikal,

in dem der Polyester einen Schwefelgehalt von mindestens 0,5 Gew.%, eine Säurezahl unter 20 mg KOH/g und eine mittlere Molekülmasse zwischen 500 und 3000 besitzt;

- ein Polymer, das von einem Acrylmonomer der Formel abgeleitet ist

$CH_2 = CX - Y$ (IV)

in der X ein Wasserstoffatom oder ein Methylradikal und Y eine der folgenden Gruppen ist:

- COOH

- COOZ wobei Z ein $C_1$-$C_8$-Alkylradikal ist, - C ≡ N

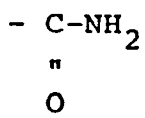

und/oder

einem Vinylmonomeren der Formel

$CH_2 = CH - OOCR$ (V)

in der R ein $C_1$-$C_{20}$-Kohlenwasserstoffradikal ist,

wobei das Polymere so beschaffen ist, daß es in Wasser bei einem pH-Wert über 8 löslich ist, daß seine Glasübergangstemperatur (Tg) wenigstens 25°C beträgt und daß seine Härte, gemessen nach der französischen Norm NF T 30-016, über 55 Sekunden beträgt.

2. Zusammensetzung nach Anspruch 1, dadurch gekennzeichnet, daß $R_1$ eines der folgenden Radikale ist: Ethylen, Tetramethylen, Hexamethylen, Octamethylen, Vinylen, Propenylen-2,3, o-Phenylen, m-Phenylen, p-Phenylen,

und daß $R_2$ eines der folgenden Radikale ist: Ethylen, Tetramethylen, Hexamethylen, Dimethyl-2,2-propylen, Oxa-3-pentanylen, Oxa-4-heptanylen, Cyclohexylen-1,4, Dicyclohexyl-2,2-propandiyl-4,4'.

3. Zusammensetzung nach Anspruch 1, dadurch gekennzeichnet, daß der sulfonierte Polyester, der an der Zusammensetzung des Polyester-Urethans beteiligt ist, durch Cokondensation einer zweiwertigen organischen Säure, eines ihrer Diester oder ihres Anhydrids und einer sulfonierten zweiwertigen organischen Säure oder eines ihrer Diester mit einem Diol erhalten wird.

4. Zusammensetzung nach Anspruch 3, dadurch gekennzeichnet, daß die zweiwertige organische Säure eine gesättigte aliphatische zweiwertige Säure ist wie Bernsteinsäure, Adipinsäure, Suberinsäure, Sebacinsäure, eine ungesättigte aliphatische zweiwertige Säure, wie Maleinsäure, Fumarsäure, Itaconsäure, oder eine aromatische zweiwertige Säure, wie Orthophthalsäure, Isophthalsäure, Terephthalsäure.

5. Zusammensetzung nach Anspruch 3, dadurch gekennzeichnet, daß die zweiwertige organische sulfonierte Säure ein Dialkylisophtalat oder ein Dialkylsulfosuccinat wie das Natriumdimethyliso-phthalat-5-sulfonat oder

das Natriumdimethylsulfosuccinat.

6. Zusammensetzung nach Anspruch 3, dadurch gekennzeichnet, daß das Diol ein aliphatisches Glykol wie Ethylenglykol, Diethylenglykol, Dipropylenglykol, Butandiol-1,4, Hexandiol-1,6, Neopentylglykol, oder ein alicyclisches Glykol wie Cyclohexandiol oder Dicyclohexandiolpropan ist.

7. Zusammensetzung nach einem der Ansprüche 1 bis 6, dadurch gekennzeichnet, daß der sulfonierte Polyester, der an der Zusammensetzung des Polyesterurethans beteiligt ist, eine mittlere Molekularmasse zwischen 1000 und 3000, eine Säurezahl unter 5 mg KOH/g, und einen Schwefelgehalt zwischen 0,8 und 2 % besitzt.

8. Zusammensetzung nach Anspruch 1, dadurch gekennzeichnet, daß das Diisocyanat in der Polyesterurethanzusammensetzung das Hexamethylendiisocyanat, das Tetramethylhexamethylendiisocyanat, Isophorondiisocyanat, die m- und p-Phenylendiisocyanate, die Toluol-2,4- und -2,6-diisocyanate, das Dicyclohexylmethan-4,4'-diisocyanat, das Diphenylmethan-4,4'-diisocyanat, das Naphthalin-1,5-diisocyanat sein kann, dessen Menge so bemessen wird, daß das Verhältnis NCO/OH + COOH unter 1 liegt.

9. Zusammensetzung nach Anspruch 1, dadurch gekennzeichnet, daß das Acryl- und/oder Vinylpolymer bei einem pH über 8 löslich ist, eine Glasübergangstemperatur zwischen 25 und 55°C und eine Härte, gemessen nach der französischen Norm NF T 30-016, zwischen 55 und 300 sec aufweist.

10. Zusammensetzung nach Anspruch 1, dadurch gekennzeichnet, daß das Acrylmonomer, das an dem Acrylund/oder Vinylpolymer beteiligt ist, Acrylsäure, Methacrylsäure und ihre $C_1$-$C_8$-Alkylester, Acrylamid, Methacrylamid, Acrylnitril, oder Methacrylnitril ist.

11. Zusammensetzung nach Anspruch 10, dadurch gekennzeichnet, daß das Acrylmonomer der Formel (IV) entspricht, in der X ein Wasserstoffatom oder ein Methylradikal und Y ein Radikal -COOH, -COOZ oder ein Gruppierung $-C{\equiv}N$ bedeutet, wobei Z ein Methyl-, Butyl-, oder Ethylhexylradikal ist.

12. Zusammensetzung nach Anspruch 1, dadurch gekennzeichnet, daß das Vinylmonomer in dem Acrylund/oder Vinylpolymer der Formel (V) entspricht, in der R ein $C_1$-$C_{20}$-Alkylradikal oder ein aromatisches Radikal ist.

13. Zusammensetzung nach Anspruch 12, dadurch gekennzeichnet, daß das Vinylmonomer das Vinylacetat, das Vinylpropionat, das Vinylbutyrat, das Vinylstearat und das Vinylbenzoat sein kann.

14. Zusammensetzung nach Anspruch 1, dadurch gekennzeichnet, daß das Acryl- und/oder Vinylpolymer in Form einer Lösung durch Zugabe einer Base zur Acryl- und/oder Vinylemulsion bis zu einem pH zwischen 7,5 und 10 erhalten wird.

15. Zusammensetzung nach Anspruch 14, dadurch gekennzeichnet, daß die Base Ammoniak ist.

16. Zusammensetzung nach Anspruch 1, dadurch gekennzeichnet, daß sie umfaßt:
- 40 bis 90 Gew.% Polyester-Urethan
- 10 bis 60 Gew.% Acryl- und/oder Vinylpolymer.

17. Zusammensetzung nach Anspruch 16, dadurch gekennzeichnet, daß sie umfaßt:
- 70 bis 90 Gew.% Polyester-Urethan
- 10 bis 30 Gew.% Acryl- und/oder Vinylpolymer.

18. Verfahren zur Herstellung der Zusammensetzung nach einem der Ansprüche 1 bis 17, dadurch gekennzeichnet, daß es in der Mischung unter Rührung des Polyester-Urethans in wäßriger Lösung mit dem Acryl- und/oder Vinylpolymer in Form der wäßrigen Lösung besteht.

19. Verfahren nach Anspruch 18, dadurch gekennzeichnet, daß die Mischung bei einer Temperatur zwischen 40 und 70°C durchgeführt wird.

20. Verfahren nach Anspruch 18, dadurch gekennzeichnet, daß der pH-Wert der Mischung zwischen 4 und 8,5 kontrolliert wird.

21. Verfahren zum Leimen von Ketten von textilen Fäden mit Hilfe der in einem der Ansprüche 1 bis 17 beschriebenen Zusammensetzung, dadurch gekennzeichnet, daß man das Leimen der Fadenketten nach einer Technik durchführt, die darin besteht, daß man die Fäden in ein wäßriges bad eintaucht, das die genannte Zusammensetzung bei der gewünschten Konzentration und Temperatur enthält, anschließend die Fäden durch Durchlaufenlassen zwischen Rollen auswringt und schließlich die geleimten Fäden auf Heizwalzen trocknet, gegebenenfalls nach vorherigem Durchlaufen von Wärmekammern.

22. Verfahren nach Anspruch 21, dadurch gekennzeichnet, daß die Konzentration des wäßrigen Bads derart ist, daß die erhaltenen Fäden bei den späteren Webvorgängen eine ausreichende Abrieb festigkeit besitzen.

23. Verfahren nach Anspruch 22, dadurch gekennzeichnet, daß die Konzentration des wäßrigen Bades zwischen 5 und 20 % beträgt.

24. Verfahren nach Anspruch 21, dadurch gekennzeichnet, daß die Temperatur des wäßrigen Bades zwischen 25 und 30°C beträgt.

25. Verfahren nach Anspruch 21, dadurch gekennzeichnet, daß man das Leimen der Fadenketten nach der abschnittsweisen Technik durchführt.

26. Verfahren nach Anspruch 21, dadurch gekennzeichnet, daß man das Leimen der Fadenketten nach der Primärtuch-Leimtechnik durchführt.

**Claims**

1. Composition for sizing warps of textile threads which is in the form of an aqueous solution characterized in that it comprises:

an anionic polyester-urethane comprising a plurality of polyester blocks: the latter consisting of at least one concatenation of units of formulae (I) and (II) joined together by groups of formula (III)

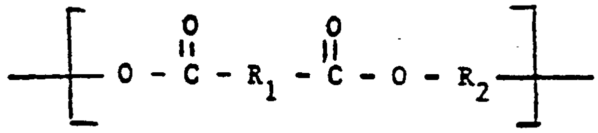 (I)

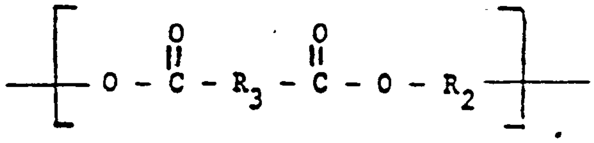 (II)

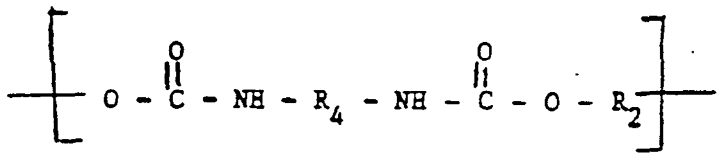 (III)

in the said formulae:

$R_1$ is a divalent radical which denotes a saturated hydrocarbon radical or an unsaturated aliphatic hydrocarbon radical or a monocyclic aromatic hydrocarbon radical,

$R_2$ is a divalent radical which denotes a saturated aliphatic radical or a saturated cyclic hydrocarbon radical,

$R_3$ is a divalent radical which may be one of the following radicals:

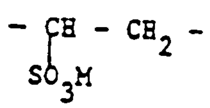 or 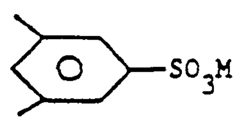

(M being an alkali metal such as sodium or potassium)

$R_4$ is a divalent radical chosen f rom the group consisting of a hexamethylene, tetramethylhexamethylene,

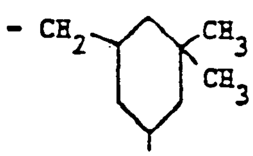

m-phenylene, p-phenylene, 2,4-tolylene, 2,6-tolylene, dicyclohexylmethane-4,4'-diyl, diphenyl-methane-4,4'-diyl or naphthalene-1,5-diyl radical,

in which the polyester has a sulphur content of at least 0.5% by weight, an acid value of less than 20 mg of KOH per gramme and a number-average molecular mass of between 500 and 3000;

a polymer derived from an acrylic monomer of formula:

$CH_2{=}CX\text{-}Y$ (IV)

in which X is a hydrogen atom or a methyl radical and Y is one of the following groups:

-COOH

-COOZ Z- being an alkyl radical containing from 1 to 8 carbon atoms

-C ≡ N

$$-\underset{\underset{O}{\|}}{C}-NH_2$$

and/or
a vinyl monomer corresponding to the formula:
$CH_2= CH\text{-}OOCR$ (V)
in which R is a hydrocarbon radical containing from 1 to 20 carbon atoms
the said polymer is such that it is soluble in water at a pH higher than 8, that its glass transition temperature (Tg) is at least higher than 25°C and that its hardness, measured according to the French standard NF T 30-016, is greater than 55 seconds.

2. Composition according to Claim 1, characterized in that $R_1$ denotes an ethylene, tetramethylene, hexamethylene or octamethylene radical, a vinylene or 2,3-propenylene radical, an o-phenylene, m-phenylene or p-phenylene radical and $R_2$ denotes an ethylene, tetramethylene, hexamethylene, 2,2-dimethylpropylene, 3-oxapentanylene or 4-oxaheptanylene radical, a 1,4-cyclohexylene radical or a 2,2-dicyclohexylpropane-4,4'-diyl radical.

3. Composition according to Claim 1, characterized in that the sulphonated polyester forming part of the composition of the polyester-urethane is obtained by cocondenation of an organic diacid, one of its diesters or its anhydride and a sulphonated organic diacid or one of its diesters with a diol.

4. Composition according to Claim 3, characterized in that the organic diacid is a saturated aliphatic diacid such as succinic, adipic, suberic or sebacic acid, an unsaturated aliphatic diacid such as maleic, fumaric or itaconic acid, or an aromatic diacid such as orthophthalic, isophthalic or terephthalic acid.

5. Composition according to Claim 3, characterized in that the sulphonated organic diacid is a dialkyl isophthalate or a dialkyl sulphosuccinate such as sodium dimethyl 5-sulphoisophthalate or sodium dimethyl sulphosuccinate.

6. Composition according to Claim 3, characterized in that the diol is an aliphatic glycol such as ethylene glycol, diethylene glycol, dipropylene glycol, 1,4-butanediol, 1,6-hexanediol or neopentyl glycol, or an alicyclic glycol such as cyclohexanediol or dicyclohexanediol propane.

7. Composition according to one of Claims 1 to 6, characterized in that the sulphonated polyester forming part of the composition of the polyester-urethane has a number-average molecular mass of between 1000 and 3000, an acid value of less than 5 mg of KOH/g and a sulphur content of between 0.8 and 2%.

8. Composition according to Claim 1, characterized in that the diisocyanate involved in the composition of the polyester-urethane is hexamethylene diisocyanate, tetramethylhexamethylene diisocyanate, isophorone diisocyanate, m- and p-phenylene diisocyanates, 2,4- and 2,6-toluene diisocyanates, 4,4'-dicyclohexylmethane diisocyanate, 4,4'-diphenylmethane diisocyanate or 1,5-naphthalene diisocyanate; its quantity which is used is such that the ratio NCO/OH + COOH is less than 1.

9. Composition according to Claim 1, characterized in that the acrylic and/or vinyl polymer is soluble at a pH higher than 8, has a glass transition temperature of between 25 and 55°C and a hardness, measured according to the French standard NF T 30-016, of between 55 and 300 seconds.

10. Composition according to Claim 1, characterized in that the acrylic monomer involved in the acrylic and/or vinyl polymer is acrylic acid, methacrylic acid and their alkyl (containing from 1 to 8 carbon atoms) esters, acrylamide, methacrylamide, acrylonitrile or methacrylonitrile.

11. Composition according to Claim 10, characterized in that the acrylic monomer corresponds to the formula (IV) in which X denotes a hydrogen atom or a methyl radical and Y denotes a -COOH or -COOZ radical in which Z denotes a methyl, butyl or ethylhexyl radical, or a $-C\equiv N$ group.

12. Composition according to Claim 1, characterized in that the vinyl monomer involved in the acrylic and/or vinyl polymer corresponds to the formula (V) in which R is an alkyl radical containing f rom 1 to 20 carbon atoms or an aromatic radical.

13. Composition according to Claim 12, characterized in that the vinyl monomer is vinyl acetate, vinyl propionate, vinyl butyrate, vinyl stearate and vinyl benzoate.

14. Composition according to Claim 1, characterized in that the acrylic and/or vinyl polymer is obtained in solution form by adding a base to the acrylic and/or vinyl emulsion until a pH of between 7.5 and 10 is obtained.

15. Composition according to Claim 14, characterized in that the base is ammonia.

16. Composition accordingto Claim 1, characterized in that it comprises: from 40 to 90% by weight of polyester-urethane and from 10 to 60% by weight of acrylic and/or vinyl polymer.

17. Composition according to Claim 16, characterized in that it comprises: from 70 to 90% by weight of polyester-urethane and from 10 to 30% by weight of acrylic and/or vinyl polymer.

18. Process for the preparation of the composition according to one of Claims 1 to 17, characterized in that it consists in producing, with stirring, a mixture of the polyester-urethane in an aqueous solution with the acrylic and/or vinyl polymer in the form of an aqueous solution.

19. Process according to Claim 18, characterized in that the mixing is performed at a temperature of 40 to 70°C.

20. Process according to Claim 18, characterized in that the pH of the mixture is controlled between 4 and 8.5.

21. Process for sizing warps of textile threads with the aid of the composition described in one of Claims 1 to 17, characterized in that the sizing of the warps of threads is performed using a method which consists in immersing the threads in an aqueous bath containing the said composition at the required concentration and temperature and then wringing the said threads by passing them between rollers and finally in drying the sized threads on heating rolls, if appropriate by a preliminary pass through hot chambers.

22. Process according to Claim 21, characterized in that the concentration of the aqueous bath is such that the threads obtained have a sufficient abrasion resistance during the subsequent weaving operations.

23. Process according to Claim 22, characterized in that the concentration of the aqueous bath varies f rom 5 to 20%.

24. Process according to Claim 21, characterized in that the temperature of the aqueous bath varies f rom 25 to 30°C.

25. Process according to Claim 21, characterized in that the sizing of the warps of threads is performed using the beam-to-beam method.

26. Process according to Claim 21, characterized in that the sizing of the warps of threads is performed using the primary layer sizing method.